# EUROPEAN PATENT SPECIFICATION

(11) **EP 3 163 711 B1**
(45) Date of publication and mention of the grant of the patent: **06.03.2019**
(21) Application number: 15812205.1
(22) Date of filing: 22.04.2015
(51) Int. Cl.: H02J 9/06, H01M 10/44, H02J 7/00, H02J 7/02, H01M 10/46, H01M 10/42, H02J 7/34, H01M 10/34

(54) **UNINTERRUPTIBLE POWER SUPPLY UNIT**
UNTERBRECHUNGSFREIE STROMVERSORGUNG
UNITÉ D'ALIMENTATION ÉLECTRIQUE SANS COUPURE

(30) Priority: 25.06.2014 JP 2014130334
(43) Date of publication of application: 03.05.2017
(73) Proprietor: FDK Corporation, Tokyo 108-8212 (JP)
(72) Inventor: SAKAMOTO, Jinichi, Tokyo 108-8212 (JP); KABASAWA, Takashi, Tokyo 108-8212 (JP)
(74) Representative: Epping - Hermann - Fischer
(86) International application number: PCT/JP2015/062252
(87) International publication number: WO 2015/198704

(56) References cited:
- JP-A- H0 356 042
- JP-A- 2012 130 158
- JP-A- 2012 196 058
- US-A1- 2002 014 880

## Description

### Technical Field

The present invention relates to an uninterruptible power supply unit.

### Background Art

An uninterruptible power supply unit is a power supply unit configured, when electric power is not supplied to a load device from an external power supply due to power failure, and the like, to supply electric power to the load device from a secondary battery charged beforehand, in order to continue the operation of the load device. Generally, the secondary battery of the uninterruptible power supply unit is charged by the external power supply at normal time. As an example of the secondary battery used for the uninterruptible power supply unit, an alkaline secondary battery, such as for example, a nickel-hydrogen secondary battery is known.

The alkaline secondary battery has a characteristic that it needs to be charged at a voltage higher than its rated voltage. However, generally, in the uninterruptible power supply unit, the rated voltage of the alkaline secondary battery is equal to the voltage of the external power supply. For this reason, when the voltage of the external power supply is used as it is, it is not possible to charge the alkaline secondary battery up to the fully charged state by electric power from the external power supply. For example, when a secondary battery whose rated voltage is lower than the voltage of the external power supply is used, the secondary battery can be charged up to the fully charged state by electric power of the external power supply. Further, at the time of power failure, the load device can be operated by electric power of the secondary battery in such a manner that the voltage of the secondary battery is boosted up to the voltage of the external power supply by, for example, a DC to DC converter. However, in this case, the DC/DC converter, which boosts the voltage of the secondary battery at the time of power failure, needs to be provided, which causes problems of increase in size and cost of the uninterruptible power supply unit.

As a measure to cope with the problems, there is known a backup power supply unit configured such that the rated voltage of the secondary battery is set to be equal to the voltage of the external power supply, and such that, at the time of charging, the voltage of the external power supply is boosted by a DC/DC converter, and the secondary battery is charged with the output voltage of the DC/DC converter (see, for example, Patent Document 1). According to the conventional technique configured in this way, the DC/DC converter for boosting the voltage of the secondary battery at power failure is not needed, and thereby, the size and cost of the uninterruptible power supply unit can be reduced.

US 2002/0014880A1 discloses an automatic back-up battery management system utilizing primary DC power for telephone switching equipment, communications equipment, computer equipment or other loads.

### Prior Art Document

### Patent Document

Patent Document 1: Japanese Patent Laid-Open No. 2009-95129

### Summary of the Invention

### Problems to be solved by the Invention

However, the above-described conventional technique is configured to supply electric power from the secondary battery to the load device via a diode or FET at power failure. That is, the conventional technique has a problem that, when electric power is supplied from the secondary battery to the load device, the electric power of the secondary battery cannot be efficiently used due to the voltage drop and power loss which arise in the diode or FET. The present invention has been made in view of the above described circumstance, and an object of the present invention is to provide an uninterruptible power supply unit which can efficiently use electric power of the secondary battery.

### Means for Solving the Problems

The problem of the invention is solved by the features of the independent claims. Preferred embodiments are defined by the dependent claims.

### <First aspect of the present invention>

A first aspect of the present invention is an uninterruptible power supply unit that is configured by including: an input/output terminal which is connected in parallel with a power supply line supplying electric power from an external power supply to a load device; a battery unit including a first battery pack and a second battery pack, each of which has the rated voltage equal to the voltage of the external power supply; a charging circuit which boosts the voltage of the external power supply to a charging voltage of the first battery pack and the second battery pack, and charges the battery unit with the boosted voltage; a discharging circuit which, at power failure of the external power supply, discharges electric power from the battery unit to the load device via the input/output terminal; and a control unit which controls the charging circuit and the discharging circuit, and is configured such that, during the first battery pack is charged, and until, after the first battery pack is charged to a fully charged state, the voltage of the first battery pack is lowered below an upper limit voltage of the load device, the control unit prohibits discharging of the first battery pack from the first battery pack to the load device via the input/output terminal and allows discharging of the second battery pack from the second battery pack to the load device via the input/output terminal, and such that, during the second battery pack is charged, and until, after the second battery pack is charged to a fully charged state, the voltage of the second battery pack is lowered below the upper limit voltage of the load device, the control unit prohibits discharging of the second battery pack from the second battery pack to the load device via the input/output terminal and allows discharging of the first battery pack from the first battery pack to the load device via the input/output terminal.

The voltage of the alkaline secondary battery, which is charged with the charging voltage, becomes higher than the rated voltage of the alkaline secondary battery before reaching the fully charged state. Further, the voltage of the alkaline secondary battery, which is charged to the fully charged state, is substantially equal to the charging voltage immediately after the charging, and then is gradually lowered. Therefore, there is possible that, during charging and immediately after full charging of the alkaline secondary battery, the voltage of the alkaline secondary battery is higher than the upper limit voltage of the load device. Therefore, at this time, when power failure occurs, and when electric power is supplied from the alkaline secondary battery to the load device, the stoppage, failure, or the like, of the load device may be caused.

The uninterruptible power supply unit is provided with the first battery pack and the second battery pack, each having a rated voltage equal to the voltage of the external power supply, and is configured to boost the voltage of the external power supply to a charging voltage of the first battery pack and the second battery pack, and to charge the battery unit with the boosted voltage. Further, during the first battery pack is charged, and until, after the first battery pack is charged to the fully charged state, the voltage of the first battery pack is lowered below the upper limit voltage of the load device, discharging of the first battery pack is prohibited, and discharging of the second battery pack is allowed. Similarly, during the second battery pack is charged, and until, after the second battery pack is charged to a fully charged state, the voltage of the second battery pack is lowered below the upper limit voltage of the load device, discharging of the second battery pack is prohibited, and discharging of the first battery pack is allowed.

With such configuration, at power failure, electric power can be always supplied to the load device from one of the first battery pack and the second battery pack, and hence, the operation of the load device can be surely continued. Further, when electric power is supplied from the battery unit to the load device at power failure, the output voltage of the battery unit is always below the upper limit voltage of the load device, and thereby, the stopping, failure, or the like, of the load device can be obviated. Further, at power failure, electric power can be directly supplied from the battery unit to the load device, and hence, the electric power of the battery unit can be efficiently used.

Thereby, according to the first aspect of the present invention, it is possible to obtain the effect of providing the uninterruptible power supply unit capable of efficiently using the electric power of the secondary battery.

### <Second aspect of present invention>

A second aspect of the present invention is an uninterruptible power supply unit configured such that, in the first aspect of the present invention, on a condition that each of the voltage of the first battery pack and the voltage of the second battery pack is below the lower limit voltage of the load device, until the voltages of the first battery pack and the second battery pack reach the upper limit voltage of the load device, the control unit simultaneously charges the first battery pack and the second battery pack and allows discharging of the first battery pack and the second battery pack.

According to the second aspect of the present invention, in the case where each of the voltage of the first battery pack and the voltage of the second battery pack is below the lower limit voltage of the load device, the first battery pack and the second battery pack are simultaneously charged, and thereby, the first battery pack and the second battery pack can be charged in a short time and efficiently. Further, during the charging, the discharging of the first battery pack and the second battery pack is allowed, and thereby, even when power failure occurs during the charging, electric power can be supplied to the load device.

### <Third aspect of the present invention>

A third aspect of the present invention is an uninterruptible power supply unit configured such that, in the second aspect of the present invention, the discharging circuit includes: a semiconductor element which is provided in a discharge path from the battery unit to the input/output terminal and lowers the voltage of the battery unit; and a bypass circuit which bypasses the semiconductor element.

In the state where the first battery pack and the second battery pack are simultaneously charged, and where discharging of each of the first battery pack and the second battery pack is allowed, when each of the voltage of the first battery pack and the voltage of the second battery pack reaches the upper limit voltage of the load device, the first battery pack and the second battery pack cannot be charged higher than the upper limit voltage. According to the third aspect of the present invention, the semiconductor element is provided in the discharge path from the battery unit to the input/output terminal, and thereby, the first battery pack and the second battery pack can be charged until the voltage of the first battery pack and the voltage of the second battery pack become higher than the upper limit voltage of the load device, by the voltage drop arisen in the semiconductor element. Thereby, the time during the first battery pack and the second battery pack are simultaneously charged can be increased, and hence, the first battery pack and the second battery pack can be more efficiently charged. Further, in the case where, at power failure, electric power of the battery unit is supplied to the load device, the semiconductor element provided in the discharge path is bypassed. Thereby, it is possible to avoid that, at power failure, electric power of the battery unit cannot be efficiently used due to the voltage drop and power loss which are arisen in the semiconductor element.

### <Fourth aspect of the present invention>

A fourth aspect of the present invention is an uninterruptible power supply unit configured such that, in one of the first to third aspects of the present invention, in the case where, at power failure, and discharging of the first battery pack is allowed, on a condition that the voltage of the first battery pack is lowered below the lower limit voltage of the load device, the control unit allows discharging of the second battery pack, and in the case where, at power failure, and discharging of the second battery pack is allowed, on a condition that the voltage of the second battery pack is lowered below the lower limit voltage of the load device, the control unit allows discharging of the first battery pack.

In this way, one of the first battery pack and the second battery pack is allowed to be discharged, and after the voltage of the one of the first battery pack and the second battery pack is lowered below the lower limit voltage of the load device, the other of the first battery pack and the second battery pack is allowed to be discharged. Thereby, the opportunity of additional charging of the first battery pack or the second battery pack can be reduced. Therefore, according to the fourth aspect of the present invention, the possibility of a temporary voltage drop caused by the memory effect of the battery unit can be reduced.

### Advantageous Effects of the Invention

According to the present invention, it is possible to provide the uninterruptible power supply unit which can efficiently use electric power of the secondary battery.

### Brief Description of the Drawings

FIG. 1 is a circuit diagram illustrating a configuration of an uninterruptible power supply unit according to the present invention.
FIG. 2 is a timing chart illustrating charge and discharge control of the uninterruptible power supply unit according to the present invention.
FIG. 3 is a circuit diagram illustrating a configuration of a modification of the uninterruptible power supply unit according to the present invention.

### Mode for Carrying out the Invention

In the following, an embodiment according to the present invention will be described with reference to the accompanying drawings.

It should be noted that the present invention is not intended to be limited to the embodiment described below, and of course, various modifications are possible within the scope of the invention described in the claims.

### <Configuration of uninterruptible power supply unit 10>

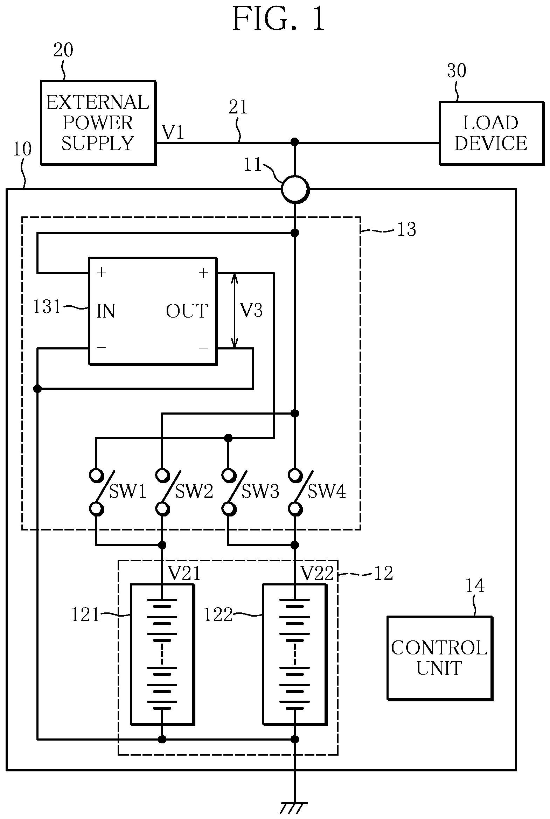

A configuration of an uninterruptible power supply unit 10 according to the present invention will be described with reference to FIG. 1.

FIG. 1 is a circuit diagram illustrating the configuration of the uninterruptible power supply unit 10. The uninterruptible power supply unit 10 is a power supply unit which, when electric power cannot be supplied from an external power supply 20 to a load device 30 due to power failure, or the like, supplies electric power to the load device 30 in order to continue the operation of the load device 30.

The uninterruptible power supply unit 10 includes an input/output terminal 11, a battery unit 12, a charge/discharge circuit 13, and a control unit 14.
The input/output terminal 11 is connected in parallel to a power supply line 21 which supplies electric power from the external power supply 20 to the load device 30. Here, the external power supply 20 is, for example, a power supply unit which converts commercial AC power to DC power with a voltage V1. Further, the load device 30 is an electronic device which is operated by the DC power with the voltage V1.
The battery unit 12 includes a first battery pack 121 and a second battery pack 122, each of which is configured by connecting alkaline secondary batteries, such as nickel-hydrogen secondary batteries in series or in parallel. Each of the first battery pack 121 and the second battery pack 122 is a battery power supply, the rated voltage of which is equal to the voltage V1 of the external power supply 20. Further, the battery unit 12 includes a circuit (not shown) which detects the voltage and temperature of each of the first battery pack 121 and the second battery pack 122.
The charge/discharge circuit 13, as a "charging circuit" and a "discharging circuit", boosts the voltage V1 of the external power supply 20 up to a charged voltage V3 of the first battery pack 121 and the second battery pack 122, and charges the battery unit 12 with the charged voltage V3. Further, when power failure of the external power supply 20 occurs, the charge/discharge circuit 13 discharges electric power from the battery unit 12 to the load device 30 via the input/output terminal 11. The charge/discharge circuit 13 includes a DC/DC converter 131, a first charging switch SW1, a first discharging switch SW2, a second charging switch SW3, and a second discharging switch SW4.
The DC/DC converter 131 is a voltage conversion unit which boosts the voltage V1 of the external power supply 20 up to the charging voltage V3 of each of the first battery pack 121 and the second battery pack 122. More specifically, the DC/DC converter 131 is a boost type DC/DC converter of an input-output insulation type.
The first charging switch SW1 is a switch for switching between a charging state and a non-charging state of the first battery pack 121. More specifically, one end side of the first charging switch SW1 is connected to the output of the DC/DC converter 131, and the other end side of the first charging switch SW1 is connected to the positive electrode of the first battery pack 121. The negative electrode of the first battery pack 121 is connected to the ground. When the first charging switch SW1 is turned on, the first battery pack 121 is charged with the output voltage (charging voltage V3) of the DC/DC converter 131. The first discharging switch SW2 is a switch for switching between a discharging state and a non-discharging state of the first battery pack 121. More specifically, one end side of the first discharging switch SW2 is connected to the input/output terminal 11, and the other end side of the first discharging switch SW2 is connected to the positive electrode of the first battery pack 121. When the first discharging switch SW2 is turned on, the first battery pack 121 is brought into a state in which electric power of the first battery pack 121 can be discharged to the load device 30 via the input/output terminal 11, that is, the first battery pack 121 is brought into the discharge allowing state.
The second charging switch SW3 is a switch for switching between a charging state and a non-charging state of the second battery pack 122. More specifically, one end side of the second charging switch SW3 is connected to the output of the DC/DC converter 131, and the other end side of the second charging switch SW3 is connected to the positive electrode of the second battery pack 122. The negative electrode of the second battery pack 122 is connected to the ground. When the second charging switch SW3 is turned on, the second battery pack 122 is charged with the output voltage (charged voltage V3) of the DC/DC converter 131.
The second discharging switch SW4 is a switch for switching between a discharging state and a non-discharging state of the second battery pack 122. More specifically, one end side of the second discharging switch SW4 is connected to the input/output terminal 11, and the other end side of the second discharging switch SW4 is connected to the positive electrode of the second battery pack 122. When the second discharging switch SW4 is turned on, the second battery pack 122 is brought into a state in which electric power of the second battery pack 122 can be discharged to the load device 30 via the input/output terminal 11, that is, the second battery pack 122 is brought into the discharge allowing state.
The control unit 14 is a known microcomputer control unit which controls the charge/discharge circuit 13. More specifically, the control unit 14 performs on/off control of the first charging switch SW1, the first discharging switch SW2, the second charging switch SW3, and the second discharging switch SW4, on the basis of the voltage V21, the temperature, and the like, of the first battery pack 121, and on the basis of the voltage V22, the temperature, and the like, of the second battery pack 122.

### <Charge and discharge control of uninterruptible power supply unit 10>

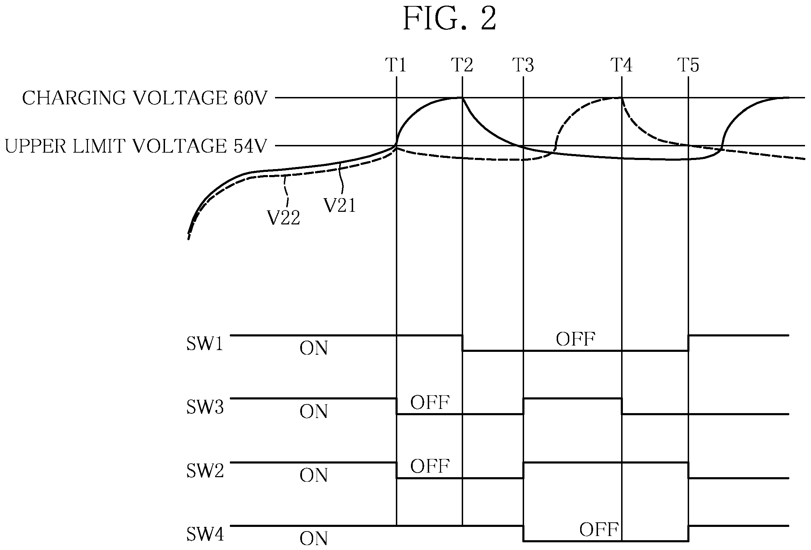

The charge and discharge control of the first battery pack 121 and the second battery pack 122, which is performed by the control unit 14, will be described with reference to FIG 2.

FIG. 2 is a timing chart illustrating the charge and discharge control of the uninterruptible power supply unit 10. In the timing chart of FIG. 2, the voltage V21 of the first battery pack 121 is illustrated by the solid line, and the voltage V22 of the second battery pack 122 is illustrated by the broken line.
Here, as an example, each of the voltage V1 of the external power supply 20, the rated voltage of the first battery pack 121, and the rated voltage of the second battery pack 122 is set to 54 V. Further, the output voltage (charging voltage V3) of the DC/DC converter 131 is set to 60 V. Further, the load device 30 is an electronic device in which the operating voltage is 40 V to 56 V, and in which the lower and upper limit voltages are 40V and 54V, respectively.
On the condition that each of the voltage V21 of the first battery pack 121 and the voltage V22 of the second battery pack 122 is lower than the lower limit voltage (40 V) of the load device 30, until the voltage V21 of the first battery pack 121 and the voltage V22 of the second battery pack 122 become the upper limit voltage (54 V) of the load device 30, the first battery pack 121 and the second battery pack 122 are simultaneously charged, while the discharging of each of the first battery pack 121 and the second battery pack 122 is allowed. More specifically, until the voltage V21 of the first battery pack 121 and the voltage V22 of the second battery pack 122 become 54 V, all of the first charging switch SW1, the first discharging switch SW2, the second charging switch SW3, and the second discharging switch SW4 are turned on.
In this way, in the case where each of the voltage V21 of the first battery pack 121 and the voltage V22 of the second battery pack 122 is lower than the lower limit voltage of the load device 30, both of the first battery pack 121 and the second battery pack 122 are simultaneously charged, and thereby, the first battery pack 121 and the second battery pack 122 can be charged in a short time and efficiently. Further, during the charging, the discharging of each of the first battery pack 121 and the second battery pack 122 is allowed. Thereby, even when power failure occurs during the charging, electric power can be supplied to the load device 30.
When the voltage V21 of the first battery pack 121 and the voltage V22 of the second battery pack 122 become equal to the voltage V1 of the external power supply 20, the charging of the second battery pack 122 is stopped, while the charging of the first battery pack 121 is continued. Additionally, the discharging of the first battery pack 121 is prohibited, while the discharging of the second battery pack 122 is allowed. More specifically, when the voltage V21 of the first battery pack 121 and the voltage V22 of the second battery pack 122 become 54 V (timing T1), the first discharging switch SW2 and the second charging switch SW3 are turned off.
When the first battery pack 121 is charged to the fully charged state, the charging of the first battery pack 121 is stopped. More specifically, when the first battery pack 121 is charged to the fully charged state (timing T2), the first charging switch SW1 is turned off. Then, when, after the first battery pack 121 is charged to the fully charged state, the voltage V21 of the first battery pack 121 is lowered below the upper limit voltage (54 V) of the load device 30, the discharging of the first battery pack 121 is allowed, the discharging of the second battery pack 122 is prohibited, and the charging of the second battery pack 122 is started. More specifically, when the voltage V21 of the first battery pack 121 becomes below 54 V (timing T3), the first discharging switch SW2 and the second charging switch SW3 are turned on, and also, the second discharging switch SW4 is turned off.
That is, during the charging of the first battery pack 121, and until, after the first battery pack 121 is charged to the fully charged state, the voltage V21 of the first battery pack 121 is lowered below the upper limit voltage of the load device 30, the control unit 14 prohibits the discharging of the first battery pack 121 (turns off the first discharging switch SW2) and allows the discharging of the second battery pack 122 (turns on the second discharging switch SW4).
When the second battery pack 122 is charged to the fully charged state, the charging of the second battery pack 122 is stopped. More specifically, when the second battery pack 122 is charged to the fully charged state (timing T4), the second charging switch SW3 is turned off. Further, when, after the second battery pack 122 is charged to the fully charged state, the voltage V22 of the second battery pack 122 is lowered below the upper limit voltage (54 V) of the load device 30, the discharging of the second battery pack 122 is allowed, the discharging of the first battery pack 121 prohibited, and the charging of the first battery pack 121 is started. More specifically, when the voltage V22 of the second battery pack 122 becomes below 54 V (timing T5), the second discharging switch SW4 and the first charging switch SW1 are turned on, and also, the first discharging switch SW2 is turned off.
That is, during the charging of the second battery pack 122, and until, after the second battery pack 122 is charged to the fully charged state, the voltage V22 of the second battery pack 122 is lowered below the upper limit voltage of the load device 30, the control unit 14 prohibits the discharging of the second battery pack 122 (turns off the second discharging switch SW4) and allows the discharging of the first battery pack 121 (turns on the first discharging switch SW2).
In this way, the uninterruptible power supply unit 10 always maintains the state in which one of the first battery pack 121 and the second battery pack 122 is charged, and also the state in which the discharging of the other of the first battery pack 121 and the second battery pack 122 is allowed. That is, at power failure, the uninterruptible power supply unit 10 can always supply electric power to the load device 30 from one of the first battery pack 121 and the second battery pack 122, and hence, can surely continue the operation of the load device 30. Further, when electric power is supplied from the battery unit 12 to the load device 30 at power failure, the output voltage of the battery unit 12 (the voltage V21 of the first battery pack 121 and the voltage V22 of the second battery pack 122) is always below the upper limit voltage of the load device 30, and hence, stoppage, failure, and the like, of the load device 30 can be obviated. Further, at power failure, electric power can be directly supplied from the battery unit 12 to the load device 30, and hence, the electric power of the battery unit 12 can be efficiently used.
In this way, according to the present invention, it is possible to provide the uninterruptible power supply unit 10 which can efficiently use electric power of the secondary battery.
Further, it is preferred that, when the discharging of the first battery pack 121 is allowed at power failure, the uninterruptible power supply unit 10 of the present invention allows discharging of the second battery pack 122 on the condition that the voltage V21 of the first battery pack 121 is lowered below the lower limit voltage of load device 30. Similarly, it is preferred that, when the discharging of the second battery pack 122 is allowed at power failure, the uninterruptible power supply unit 10 of the present invention allows discharging of the first battery pack 121 on the condition that the voltage V22 of the second battery pack 122 is lowered below the lower limit voltage of load device 30. This configuration is not essential in the present invention, but with this configuration, the opportunity of additional charging of the first battery pack 121 or the second battery pack 122 can be reduced, and thereby, the possibility of occurrence of temporary voltage drop caused by the memory effect of the battery unit 12 can be reduced.

### <Modification>

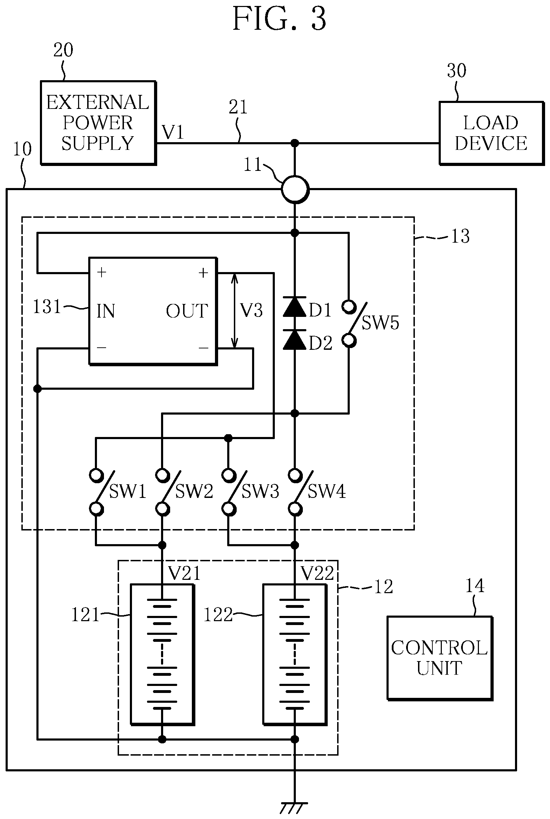

A modification of the uninterruptible power supply unit 10 according to the present invention will be described with reference to FIG. 3.

FIG. 3 is a circuit diagram illustrating the configuration of a modification of the uninterruptible power supply unit 10.
The configuration of the modification of the uninterruptible power supply unit 10 is the same as that of the uninterruptible power supply unit 10 shown in FIG. 1 except for the configuration of the charge/discharge circuit 13. The common components are denoted by the same reference numerals and characters, and hence the detailed description thereof will be omitted. More specifically, a charge/discharge circuit 13 of the modification is further provided with diodes D1 and D2, and a bypass switch SW5 in addition to the charge/discharge circuit 13 shown in FIG. 1. The diode D1 and D2 are connected in series. The cathode of the diode D1 is connected to the input/output terminal 11. The anode of the diode D2 is connected to each of the positive electrodes of the first battery pack 121 and the second battery pack 122 via each of the first discharging switch SW2 and the second discharging switch SW4. That is, the diodes D1 and D2 are provided in the discharge path from the battery unit 12 to the input/output terminal 11, and are semiconductor elements which lower the voltage of the battery unit 12.
One end of the bypass switch SW5 as a "bypass circuit" is connected to the cathode of the diode D1, and the other end of the bypass switch SW5 is connected to the anode of the diode D2. That is, the bypass switch SW5 is a switch which bypasses the diodes D1 and D2 in the discharge path from the battery unit 12 to the input/output terminal 11. The bypass switch SW5 is on/off controlled by the control unit 14.
As described above, on the condition that each of the voltage V21 of the first battery pack 121 and the voltage V22 of the second battery pack 122 is below the lower limit voltage (40 V) of the load device 30, the control unit 14 simultaneously charges the first battery pack 121 and the second battery pack 122 and allows discharging of the first battery pack 121 and the second battery pack 122 until the voltage V21 of the first battery pack 121 and the voltage V22 of the second battery pack 122 become the upper limit voltage (54 V) of the load device 30. When, in the state in which the first battery pack 121 and the second battery pack 122 are simultaneously charged, and in which the discharging of the first battery pack 121 and the second battery pack 122 is allowed, the voltage V21 of the first battery pack 121 and the voltage V22 of the second battery pack 122 become the upper limit voltage (54 V) of the load device 30, the charge/discharge circuit 13 shown in FIG. 1 cannot further charge the first battery pack 121 and the second battery pack 122.
On the other hand, in the charge/discharge circuit 13 (FIG. 3) of the modification, the voltage drop of about 1 V is arisen in the diodes D1 and D2. Therefore, in the state in which the bypass switch SW5 is turned off, the voltage V21 of the first battery pack 121 and the voltage V22 of the second battery pack 122 can be lowered by about 1 V at the input/output terminal 11. Thereby, the charge/discharge circuit 13 of the modification can charge the first battery pack 121 and the second battery pack 122 until the voltage V21 of the first battery pack 121 and the voltage V22 of the second battery pack 122 become higher than the upper limit voltage (54 V) of the load device 30 by the voltage drop (about 1 V) arisen in the diodes D1 and D2.
That is, in the state in which the discharging of each of the first battery pack 121 and the second battery pack 122 is allowed until the voltage V21 of the first battery pack 121 and the voltage V22 of the second battery pack 122 become about 55 V, the charge/discharge circuit 13 of the modification can simultaneously charge the first battery pack 121 and the second battery pack 122. Thereby, the charging time of the first battery pack 121 and the second battery pack 122 can be increased, and hence, the charge/discharge circuit 13 of the modification can more effectively charge the first battery pack 121 and the second battery pack 122.
Further, when electric power of the battery unit 12 is supplied to the load device 30 at power failure, the control unit 14 turns on the bypass switch SW5 to bypass the diodes D1 and D2. Thereby, it is possible to avoid that, at power failure, electric power of the battery unit 12 cannot be efficiently used due to the voltage drop and power loss which are arisen in the diodes D1 and D2.

### Explanation of Reference Signs

- 10: Uninterruptible power supply unit
- 11: Input/output terminal
- 12: Battery unit
- 13: Charge/discharge circuit
- 14: Control unit
- 20: External power supply
- 30: Load device
- 121: First battery pack
- 122: Second battery pack
- 131: DC/DC converter
- D1, D2: Diode
- SW1: First charging switch
- SW2: First discharging switch
- SW3: Second charging switch
- SW4: Second discharging switch
- SW5: Bypass switch

## Claims

1. An uninterruptible power supply unit (10) comprising:
an input/output terminal (11) which is connected in parallel with a power supply line (21) supplying electric power from an external power supply (20) to a load device (30) ;
a battery unit (12) including a first battery pack (121) and a second battery pack (122), each of which has a rated voltage equal to the voltage of the external power supply (20);
a charging circuit configured to boost the voltage of the external power supply (20) to a charging voltage of the first battery pack (121) and the second battery pack (122), and further configured to charge the battery unit (12) with the boosted voltage;
a discharging circuit which is configured to, at the time of power failure of the external power supply (20), discharge electric power from the battery unit (12) to the load device (30) via the input/output terminal (11); and
a control unit (14) which is configured to control the charging circuit and the discharging circuit, **characterized in that** wherein, during charging of the first battery pack (121), and until, after the first battery pack (121) is charged to a fully charged state, the voltage of the first battery pack (121) is lowered below an upper limit voltage of the load device (30), the control unit (14) is configured to prohibit discharging of the first battery pack (121) from the first battery pack (121) to the load device (30) via the input/output terminal (11) and is further configured to allow discharging of the second battery pack (122) from the second battery pack (122) to the load device (30) via the input/output terminal (11), and
during charging of the second battery pack (122), and until, after the second battery pack (122) is charged to a fully charged state, the voltage of the second battery pack (122) is lowered below the upper limit voltage of the load device (30), the control unit (14) is configured to discharge the second battery pack (122) from the second battery pack (122) to the load device (30) via the input/output terminal (11) and is further configured to allow discharging of the first battery pack (121) from the first battery pack (121) to the load device (30) via the input/output terminal (11).

2. The uninterruptible power supply unit (10) according to claim 1, wherein, on a condition that each of the voltage of the first battery pack (121) and the voltage of the second battery pack (122) is lower than the lower limit voltage of the load device (30), until the voltage of the first battery pack (121) and the voltage of the second battery pack (122) reach the upper limit voltage of the load device (30), the control unit (14) is configured to simultaneously charge the first battery pack (121) and the second battery pack (122) and is further configured to allow discharging of the first battery pack (121) and the second battery pack (122).

3. The uninterruptible power supply unit (10) according to claim 2, wherein the discharging circuit includes: a semiconductor element which is provided in a discharge path from the battery unit (12) to the input/output terminal (11) and is configured to lower the voltage of the battery unit (12); and a bypass circuit which is configured to bypass the semiconductor element.

4. The uninterruptible power supply unit (10) according to one of claim 1 to claim 3, wherein: in the state where, at power failure, and discharging of the first battery pack (121) is allowed, on a condition that the voltage of the first battery pack (121) is lowered below the lower limit voltage of the load device (30), the control unit (14) is configured to allow discharging of the second battery pack(122); and in the state where, at power failure, and discharging of the second battery pack (122) is allowed, on a condition that the voltage of the second battery pack (122) is lowered below the lower limit voltage of the load device (30), the control unit (14) is configured to allow discharging of the first battery pack (121).

## Patentansprüche

1. Unterbrechungsfreie Stromversorgungseinheit (10), aufweisend:
einen Eingangs-/Ausgangsanschluss (11), der parallel zu einer Stromversorgungsleitung (21) geschaltet ist, die elektrische Energie von einer externen Stromversorgung (20) zu einer Lastvorrichtung (30) liefert;
eine Batterieeinheit (12) mit einem ersten Batteriepack (121) und einem zweiten Batteriepack (122), von denen jeder eine Nennspannung aufweist, die der Spannung der externen Stromversorgung (20) entspricht;
eine Ladeschaltung, die dazu ausgelegt ist, die Spannung der externen Stromversorgung (20) auf eine Ladespannung des ersten Batteriepacks (121) und zweiten Batteriepacks (122) zu erhöhen, und ferner dazu ausgelegt ist, die Batterieeinheit (12) mit der erhöhten Spannung zu laden;
eine Entladeschaltung, die dazu ausgelegt ist, zum Zeitpunkt eines Stromausfalls der externen Stromversorgung (20) elektrische Energie von der Batterieeinheit (12) über den Eingangs-/Ausgangsanschluss (11) an die Lastvorrichtung (30) abzuführen; und
eine Steuereinheit (14), die dazu ausgelegt ist, die Ladeschaltung und die Entladeschaltung zu steuern,
**dadurch gekennzeichnet, dass**
während des Ladens des ersten Batteriepacks (121) und bis zu dem Zeitpunkt, nachdem ein vollständig geladener Zustand des ersten Batteriepacks (121) erreicht ist, die Spannung des ersten Batteriepacks (121) unter eine obere Grenzspannung der Lastvorrichtung (30) abgesenkt wird, die Steuereinheit (14) dazu ausgelegt ist, das Entladen des ersten Batteriepacks (121) ausgehend vom ersten Batteriepack (121) zur Lastvorrichtung (30) über den Eingangs-/Ausgangsanschluss (11) zu verhindern, und ferner dazu ausgelegt ist, das Entladen des zweiten Batteriepacks (122) ausgehend vom zweiten Batteriepack (122) zur Lastvorrichtung (30) über den Eingangs-/Ausgangsanschluss (11) zu ermöglichen, und
während des Ladens des zweiten Batteriepacks (122) und bis zu dem Zeitpunkt, nachdem ein vollständig geladener Zustand des zweiten Batteriepacks (122) erreicht ist, die Spannung des zweiten Batteriepacks (122) unter die obere Grenzspannung der Lastvorrichtung (30) abgesenkt wird, die Steuereinheit (14) dazu ausgelegt ist, den zweiten Batteriepack (122) ausgehend vom zweiten Batteriepack (122) zur Lastvorrichtung (30) über den Eingangs-/Ausgangsanschluss (11) zu entladen, und ferner dazu ausgelegt ist, das Entladen des ersten Batteriepacks (121) ausgehend vom ersten Batteriepack (121) zur Lastvorrichtung (30) über den Eingangs-/Ausgangsanschluss (11) zu ermöglichen.

2. Unterbrechungsfreie Stromversorgungseinheit (10) nach Anspruch 1, wobei unter der Bedingung, dass die Spannung des ersten Batteriepacks (121) und die Spannung des zweiten Batteriepacks (122) jeweils niedriger ist als die untere Grenzspannung der Lastvorrichtung (30), bis die Spannung des ersten Batteriepacks (121) und die Spannung des zweiten Batteriepacks (122) die obere Grenzspannung der Lastvorrichtung (30) erreichen, die Steuereinheit (14) dazu ausgelegt ist, den ersten Batteriepack (121) und den zweiten Batteriepack (122) gleichzeitig zu laden, und ferner dazu ausgelegt ist, das Entladen des ersten Batteriepacks (121) und des zweiten Batteriepacks (122) zu ermöglichen.

3. Unterbrechungsfreie Stromversorgungseinheit (10) nach Anspruch 2, wobei die Entladeschaltung aufweist: ein Halbleiterelement, das in einem Entladepfad von der Batterieeinheit (12) zum Eingangs-/Ausgangsanschluss (11) vorgesehen und dazu ausgelegt ist, die Spannung der Batterieeinheit (12) zu senken; und eine Bypass-Schaltung, die dazu ausgelegt ist, das Halbleiterelement zu umgehen.

4. Unterbrechungsfreie Stromversorgungseinheit (10) nach einem der Ansprüche 1 bis 3, wobei: in dem Zustand, in dem ein Stromausfall vorliegt und das Entladen des ersten Batteriepacks (121) ermöglicht ist, unter der Bedingung, dass die Spannung des ersten Batteriepacks (121) bis auf unter die untere Grenzspannung der Lastvorrichtung (30) abgesenkt ist, die Steuereinheit (14) dazu ausgelegt ist, das Entladen des zweiten Batteriepacks (122) zu ermöglichen; und in dem Zustand, in dem ein Stromausfall vorliegt und das Entladen des zweiten Batteriepacks (122) ermöglicht ist, unter der Bedingung, dass die Spannung des zweiten Batteriepacks (122) bis auf unter die untere Grenzspannung der Lastvorrichtung (30) abgesenkt ist, die Steuereinheit (14) dazu ausgelegt ist, das Entladen des ersten Batteriepacks (121) zu ermöglichen.

## Revendications

1. Unité d'alimentation en puissance non interruptible (10) comprenant :
une borne d'entrée/sortie (11) qui est connectée en parallèle à une ligne d'alimentation en puissance (21) fournissant de la puissance électrique provenant d'une alimentation en puissance externe (20) à un dispositif de charge (30) ;
une unité de batteries (12) incluant un premier bloc de batteries (121) et un deuxième bloc de batteries (122), dont chacun présente une tension nominale égale à la tension de l'alimentation en puissance externe (20) ;
un circuit de charge configuré pour relever la tension de l'alimentation en puissance externe (20) à une tension de charge du premier bloc de batteries (121) et du deuxième bloc de batteries (122), et configuré en outre pour charger l'unité de batteries (12) avec la tension relevée ;
un circuit de décharge qui est configuré pour, au moment d'une coupure de puissance de l'alimentation en puissance externe (20), décharger de la puissance électrique depuis l'unité de batteries (12) vers le dispositif de charge (30) via la borne d'entrée/sortie (11) ; et
une unité de commande (14) qui est configurée pour commander le circuit de charge et le circuit de décharge,
**caractérisée en ce que**, pendant la charge du premier bloc de batteries (121), et jusqu'à ce que, après que le premier bloc de batteries (121) est chargé à un état entièrement chargé, la tension du premier bloc de batteries (121) soit abaissée sous une tension limite supérieure du dispositif de charge (30), l'unité de commande (14) est configurée pour empêcher la décharge du premier bloc de batteries (121) depuis le premier bloc de batteries (121) vers le dispositif de charge (30) via la borne d'entrée/sortie (11) et est en outre configurée pour permettre la décharge du deuxième bloc de batteries (122) depuis le deuxième bloc de batteries (122) vers le dispositif de charge (30) via la borne d'entrée/sortie (11), et
pendant la charge du deuxième bloc de batteries (122), et jusqu'à ce que, après que le deuxième bloc de batteries (122) est chargé à un état entièrement chargé, la tension du deuxième bloc de batteries (122) soit abaissée sous la tension limite supérieure du dispositif de charge (30), l'unité de commande (14) est configurée pour décharger le deuxième bloc de batteries (122) depuis le deuxième bloc de batteries (122) vers le dispositif de charge (30) via la borne d'entrée/sortie (11) et est en outre configurée pour permettre la décharge du premier bloc de batteries (121) depuis le premier bloc de batteries (121) vers le dispositif de charge (30) via la borne d'entrée/sortie (11).

2. L'unité d'alimentation en puissance non interruptible (10) selon la revendication 1, sachant que, à condition que chacune de la tension du premier bloc de batteries (121) et de la tension du deuxième bloc de batteries (122) soit inférieure à la tension limite inférieure du dispositif de charge (30), jusqu'à ce que la tension du premier bloc de batteries (121) et la tension du deuxième bloc de batteries (122) atteignent la tension limite supérieure du dispositif de charge (30), l'unité de commande (14) est configurée pour charger simultanément le premier bloc de batteries (121) et le deuxième bloc de batteries (122) et est en outre configurée pour permettre la décharge du premier bloc de batteries (121) et du deuxième bloc de batteries (122).

3. L'unité d'alimentation en puissance non interruptible (10) selon la revendication 2, sachant que le circuit de décharge inclut : un élément semiconducteur qui est disposé dans un chemin de décharge allant de l'unité de batteries (12) à la borne d'entrée/sortie (11) et qui est configuré pour abaisser la tension de l'unité de batteries (12) ; et un circuit de dérivation qui est configuré pour contourner l'élément semiconducteur.

4. L'unité d'alimentation en puissance non interruptible (10) selon l'une de la revendication 1 à la revendication 3, sachant que : dans l'état où, en cas de coupure de puissance, et la décharge du premier bloc de batteries (121) est permise, à condition que la tension du premier bloc de batteries (121) soit abaissée sous la tension limite inférieure du dispositif de charge (30), l'unité de commande (14) est configurée pour permettre la décharge du deuxième bloc de batteries (122) ; et dans un état où, en cas de coupure de puissance, et la décharge du deuxième bloc de batteries (122) est permise, à condition que la tension du deuxième bloc de batteries (122) soit abaissée sous la tension limite inférieure du dispositif de charge (30), l'unité de commande (14) est configurée pour permettre la décharge du premier bloc de batteries (121).
